# EUROPEAN PATENT SPECIFICATION

(11) **EP 3 939 831 B1**
(45) Date of publication and mention of the grant of the patent: **24.07.2024**
(21) Application number: 21020306.3
(22) Date of filing: 11.06.2021
(51) Int. Cl.: B60P 3/39, B60P 3/07

(54) **RECREATIONAL VEHICLE LAYOUT**
FREIZEITFAHRZEUGLAYOUT
AMÉNAGEMENT DE VÉHICULE DE LOISIRS

(30) Priority: 16.07.2020 HU 2000234
(43) Date of publication of application: 19.01.2022
(73) Proprietor: Dembell Hungary Kft., 1024 Budapest (HU)
(72) Inventor: Valint, Zoltán, 1021 Budapest (HU)
(74) Representative: Pintz, György

(56) References cited:
- EP-A2- 3 181 399
- DE-A1- 2 840 840
- US-A1- 2004 262 946
- US-B1- 10 654 398
- US-B1- 6 692 062

## Description

The subject of the invention is a recreational vehicle layout, which includes a primary recreational vehicle, a secondary vehicle, a garage realized in the back of the recreational vehicle, a rear door, a sleeping cabin located above the garage, a living room, a ramp to facilitate the entry of the vehicle, a living room floor, and a movable sleeping cabin floor.

City centres and towns that attract tourists more and more tend to ban recreational vehicles from entering, and grant entry and parking permits to such vehicles only to areas outside the city. As a consequence, recreational vehicles have been supplemented with bicycles and motorcycles, and then recreational vehicles also appeared on the luxury market of such vehicles and became capable of holding and transporting an entire car. It may seem that, with this solution, recreational vehicles could travel without any compromise but, in reality, this solution posed a number of problems. The maximum size of recreational vehicles is officially restricted: the maximum length, width and height of such vehicles may not exceed 12 m, 2.5 m and 4 m respectively. Sleeping areas are normally located above the car / garage. For prior art models, the typical height of a bedroom is 150 to 160 cm. Considering the comfort needs of recreational vehicle users, this interior height is very low, as it makes it impossible to stand up, and the air space is also small. Another compromise is that only smaller vehicles can fit in recreational vehicles due to the maximum length being limited to 12 m.

It is believed that one the closest solutions of the prior art is patent description No GB2103551 A, which describes an invention of about 40 years. According to the description, a smaller vehicle is parked into a recreational vehicle in a place where there are normally one or two beds. For rolling in, one or two beds are lifted by a suitable mechanism. When the smaller vehicle rolls out, the ceiling of the "garage" is lowered to the floor, from which various pieces of furniture can be folded out, or which can be a bed. The solution may also include a bunk bed, in which implementation form the lower bed can be moved up and down. Moving the beds is not unknown for recreational vehicles anyway, as it can save space not only in a small apartment, but also in a recreational vehicle. Such solutions are presented in patent documents Nos US 6,629,322 B1, US 2004/0262946 A1, US 2008/0129086 A1, EP 2 396 267 B1 and US 2015/0041601 A1.

EP 3181399 A2 describes a mobile home with a storage space which is intended to accommodate at least one bicycle. It has a floor height adjustment unit a tire receptacle forming a partial recess in the bottom wall. It has also a top wall which is designed to be movable relative to the bottom wall with the help of a hinge unit. This solution is not appropriate for auxiliary cars.

US 6692062 B1 describes a luxury motor coach conversion and it appears to be the closest prior art. The motor coach utilizes the sleeper portion of the original truck body and includes a rear body portion that is mounted to a frame of the tractor rearwardly of the sleeper portion. Optionally, the motor coach includes a garage having a tiltable floor that supports an auxiliary vehicle during travel and pivots to slope downwardly for loading and unloading the auxiliary vehicle. The floor is not moveable and cannot adjust to the height of the auxiliary car.

US 10654398 B1 describes a toy hauler recreational vehicle which includes three living areas, each having a floor, and a garage located below the third living area. A bed is located in the third living area and is moveable between a lowered position and a raised position. The garage has an adjustable height defined by a distance between a garage floor and a ceiling. The adjustable height is greater when the bed is in the raised position than the adjustable height in the lowered position.

None of the documents that form part of the prior art provides instructions on how to place a vehicle of comfortable size, that is not necessarily a mini car, into a recreational vehicle so that there is left enough space above it to relax while traveling, while also providing a bedroom of up to 2.1 m height at night. This height already reaches the usual ceiling height of basement flats.

The purpose of the invention is to eliminate the shortfalls of solutions that form part of the state of the art and to provide a vehicle layout which allows category "C" vehicles, that is vehicles exceeding the length of the mini-categories, to be kept in recreational vehicles overnight so that a living space reaching the height of basement apartments, that is of at least 2 m, is left.

The inventive step is based on the recognition that a solution, which is more advantageous than the previous ones, may be created by implementing the solution according to claim 1.

To this end, the ceiling separating the garage space from the sleeping cabin is realized not as a plane but as a gradual shape that partially follows the shape of a vehicle parking on a tilted surface. The tilted placement makes it possible for the vehicle to occupy the space above the wheels, meaning that the vehicle takes up less space in the recreational vehicle longitudinally. The panel (gradual ceiling) implemented above the passenger space, i.e. the highest section of the vehicle, has the unexpected advantage that the size of the panel is increased so that its upper surface forms a platform-like protrusion in the size of a bed. This eliminates the apparent contradiction that reducing the longitudinal space would increase the height of the garage space, which would in turn reduce the height of the sleeping space because of the maximum limit of 4 m. If the bed space is realized on this platform, the walking part of the sleeping space can be significantly lower (located above the hood and the trunk), meaning that a living space exceeding 2 m can be provided for the walking area. Another unexpected consequence is that a person can sit on the bed comfortably, not only lie on the bed as customary in tents.

In line with the desired purpose, the most general implementation form of the solution according to the invention is described in claim 1. Advantageous implementation forms are described in the subclaims.

The recreational vehicle layout according to the invention includes a primary recreational vehicle, a secondary vehicle, a garage realized in the back of the recreational vehicle, a rear door, a sleeping cabin located above the garage, a living room, a ramp to facilitate the entry of the vehicle, a living room floor, and a movable sleeping cabin floor, and the sleeping cabin floor separates the garage from the sleeping cabin, and it is realized so that the sleeping cabin floor includes a panel at a height that exceeds the highest part of the vehicle, and the vehicle is located in the garage on a ramp that forms an acute angle with the base plate of the garage. Hydraulic elevators that can move the sleeping cabin floor up and down are located in the garage. A folding step is located between the living room floor and the sleeping cabin floor to overcome the corresponding difference in height.

In certain implementation forms, the platform that can be used as a lying surface is realized above and in the size of the panel. A control unit is connected to the hydraulic elevators. The ramp that supports the vehicle and the ramp that is used for rolling in form a single unit. The ramp that supports the vehicle forms a 5 to 30 degree angle, suitably a 15 to 20 degree angle with the base plate of the garage. The ramp that supports the vehicle may be connected to the control unit.

The invention is presented in more detail using drawings of possible implementation forms. On the attached drawings,
1. Figure 1 shows a longitudinal section of the invention with a vehicle parked in the garage,
2. Figure 2 shows a cross-section of the invention with a vehicle parked in the garage, and
3. Figure 3 shows a longitudinal section of the entire recreational vehicle

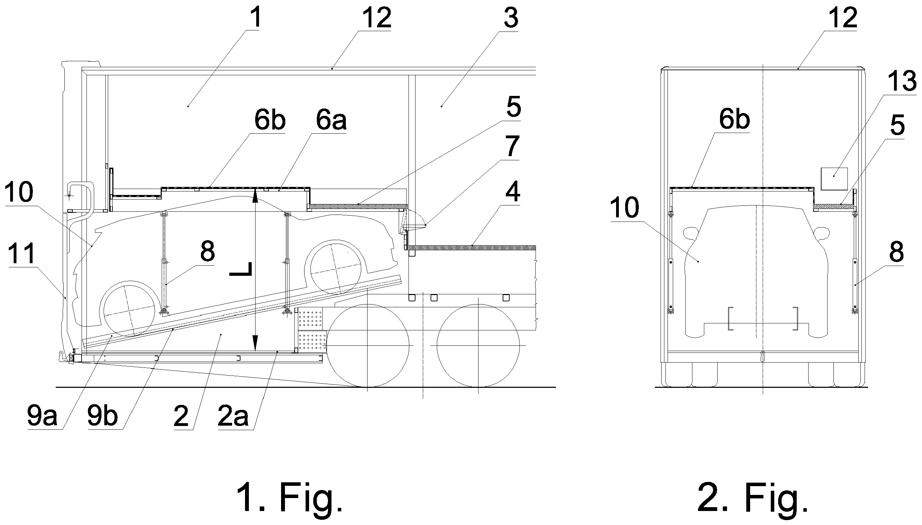

Figure 1 shows the sleeping cabin 1, the garage 2 and its base plate 2a, the living room 3, the living room floor 4, the sleeping cabin floor 5, the panel 6a and its upper part, i.e. the platform 6b, the folding step 7, the hydraulic elevator 8, the ramp 9a used for rolling in, the ramp 9b that supports the vehicle, the secondary vehicle 10, the rear door 11 and the primary recreational vehicle 12. The L distance / height between the base plate 2a and the upper part of the panel 6a that is realized in the sleeping cabin floor 5 exceeds the height of the highest part of the tilted vehicle 10. The sleeping cabin floor 5 can be moved up and down using the hydraulic elevator 8, so that the height L can also be adjusted according to the height of the vehicle 10, and the distance between the sleeping cabin floor 5 and the base plate 2a can be stored, possibly for each vehicle type, using the control unit 13 shown on Figure 2.

A platform 6b that can be used as a lying surface is realized above and in the size of the panel 6a located in the sleeping cabin floor 5. A mattress may be placed onto the platform 6b directly, and it is also suitable for comfortable sitting. The figure also shows the ramp that facilitates the roll-in or pull-in; it is shown when it is pulled in, and it is in the same position as the ramp 9b that supports the vehicle 10. In another implementation form, the ramps 9a, 9b are one and the same. The ramp 9b forms an acute angle with the base plate 2a of the garage 2; this angle is a 5 to 30, suitably a 15 to 20 degree angle. A folding step 7 is located between the living room floor 4 and the sleeping cabin floor 5 to overcome the corresponding difference in height. The folding step 7 may also be fitted with a flexible part so that it can be adjusted to different heights L.

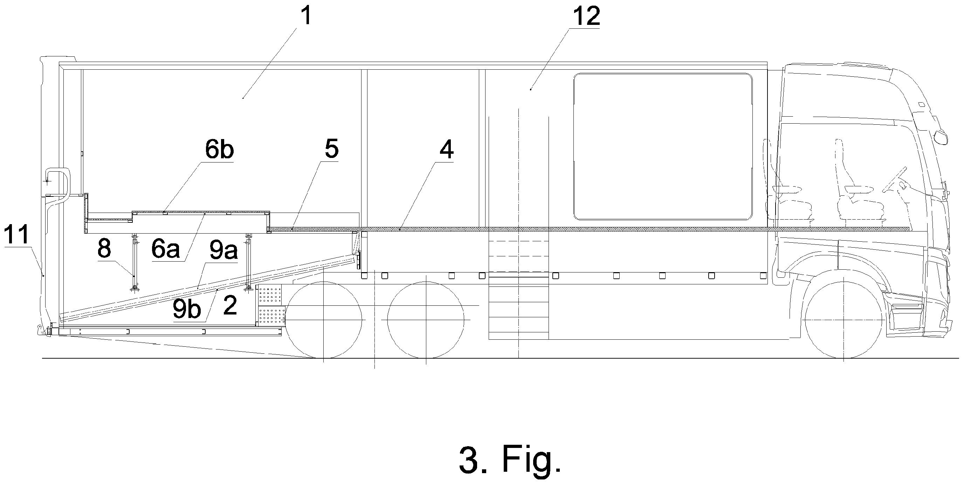

Figure 2 shows the vehicle 10, the recreational vehicle 12, the sleeping cabin floor 5, the platform 6b, the hydraulic elevator 8, and the control unit 13. On Figure 3, the vehicle 10 is not parked in the garage 2, and the sleeping cabin floor 5 is in a lowered position. Figure 3 shows the sleeping cabin 1, the rear door 11, the panel 6a, the platform 6b, the living room floor 4, the hydraulic elevator 8, and the ramp 9a, 9b. In this night mode, the living room floor 4 and the sleeping cabin floor 5 is in the same plane.

The invention has numerous advantages. The recreational vehicle can hold a vehicle, for example a category "C" (low-mid to mid category) vehicle, that is more spacious than earlier ones. While travelling, there is enough space for resting, even if a vehicle is parked inside. The tilted position of the vehicle and the panel located in the ceiling make it possible, after the ceiling is lowered, to provide a bedroom of up to 2.1 m height for night. This height already reaches the usual ceiling height of basement flats. As the panel and its positive upper surface is realized as a platform bed, it is possible to sit on the bed comfortably, not only to lay on it in a tent-like manner.

In addition to the above examples, the invention can be implemented in other forms within the scope of protection as defined by the claims. The invention can be applied primarily on the market of luxury recreational vehicles

## Claims

1. A recreational vehicle layout, which includes a primary recreational vehicle (12), a secondary vehicle (10), a garage (2) realized in the back of the recreational vehicle, a rear door (11), a sleeping cabin (1) located above the garage (2), a living room (3), a ramp (9a) to facilitate the entry of the vehicle (10), a living room floor (4), and a movable sleeping cabin floor (5), and the sleeping cabin floor (5) separates the garage (2) from the sleeping cabin (1), the sleeping cabin floor (5) includes a panel (6a) at a height (L) that exceeds the highest part of the vehicle (10), and the vehicle (10) is located in the garage (2) on a ramp (9b) that forms an acute angle with the base plate (2a) of the garage (2), further comprising hydraulic elevators (8) that can move the sleeping cabin floor (5) up and down are located in the garage (2) and a folding step (7) that is located between the living room floor (4) and the sleeping cabin floor (5) to overcome the corresponding difference in height.

2. The vehicle layout according to claim 1, **characterized in that** a platform (6b) that can be used as a lying surface is realized above and in the size of the panel (6a).

3. The vehicle layout according to claim 1 or 2, **characterized in that** a control unit (13) is connected to the hydraulic elevators (8).

4. Any of the vehicle layouts according to claims 1 to 3, **characterized in that** the ramp (9b) that supports the vehicle (10) and the ramp (9a) that is used for rolling in form a single unit.

5. Any of the vehicle layouts according to claims 1 to 4, **characterized in that** the ramp (9b) that supports the vehicle (10) forms a 5 to 30 degree angle, suitably a 15 to 20 degree angle with the base plate (2a) of the garage (2).

## Patentansprüche

1. Ein Wohnmobil-Layout, das ein primäres Wohnmobil (12), ein Sekundärfahrzeug (10), eine im Heck des Wohnmobils realisierte Garage (2), eine Hecktür (11), eine über der Garage (2) angeordnete Schlafkabine (1), einen Wohnraum (3), eine Rampe (9a) zur Erleichterung des Einstiegs in das Fahrzeug (10), einen Wohnraumboden (4) und einen beweglichen Schlafkabinenboden (5) umfasst, wobei der Schlafkabinenboden (5) die Garage (2) von der Schlafkabine (1) trennt, der Schlafkabinenboden (5) eine Platte (6a) auf einer Höhe (L) umfasst, die den höchsten Teil des Fahrzeugs (10) überragt, und das Fahrzeug (10) sich in der Garage (2) auf einer Rampe (9b) befindet, die einen spitzen Winkel mit der Grundplatte (2a) der Garage (2) bildet, ferner umfassend
hydraulische Hebevorrichtungen (8),
die den Schlafkabinenboden (5) auf und ab bewegen können,
und in der Garage (2] angeordnet sind und eine Klappstufe (7),
die sich zwischen dem Wohnraumboden (4) und dem Schlafkabinenboden (5) befindet, um den entsprechenden Höhenunterschied zu überwinden.

2. Das Fahrzeuglayout nach Patentanspruch 1, **dadurch gekennzeichnet, dass** eine Plattform (6b), die als Liegefläche genutzt werden kann, oberhalb und in der Größe der Platte (6a) realisiert ist.

3. Das Fahrzeuglayout nach Patentanspruch 1 oder 2, **dadurch gekennzeichnet, dass** eine Steuereinheit (13) mit den hydraulischen Hebevorrichtungen (8) verbunden ist.

4. Jedes der Fahrzeuglayouts nach den Patentansprüchen 1 bis 3, **dadurch gekennzeichnet, dass** die Rampe (9b), die das Fahrzeug (10) trägt, und die Rampe (9a), die zum Einrollen verwendet wird, eine Einheit bilden.

5. Jedes der Fahrzeuglayouts nach den Patentansprüchen 1 bis 4, **dadurch gekennzeichnet, dass** die Rampe (9b), die das Fahrzeug (10) trägt, einen Winkel von 5 bis 30 Grad, vorzugsweise einen Winkel von 15 bis 20 Grad mit der Grundplatte (2a) der Garage (2) bildet.

## Revendications

1. Aménagement de véhicule de loisirs, qui comprend un véhicule de loisirs principal (12), un véhicule secondaire (10), un garage (2) réalisé à l'arrière du véhicule de loisirs, une porte arrière (11), une cabine de couchage (1) située au-dessus du garage (2), un salon (3), une rampe (9a) pour faciliter l'entrée du véhicule (10),
un plancher de salon (4), et un plancher de cabine de couchage mobile (5), et le plancher de cabine de couchage (5) sépare le garage (2) de la cabine de couchage (1), le plancher de cabine de couchage (5) comprend un panneau (6a) à une hauteur (L) qui dépasse la partie la plus haute du véhicule (10), et le véhicule (10) est situé dans le garage (2) sur une rampe (9b) qui forme un angle aigu avec la plaque de base (2a) du garage (2), comprenant en outre
des élévateurs hydrauliques (8) qui
peuvent déplacer le plancher de cabine de couchage (5) de haut en bas qui sont situés dans le garage (2]
et une marche pliante (7) qui
est située entre le plancher de salon (4) et le plancher de cabine de couchage (5) pour surmonter la différence de hauteur correspondante.

2. Aménagement de véhicule selon la revendication 1, **caractérisé en ce qu'**une plateforme (6b) qui peut être utilisée comme surface de couchage est réalisée au-dessus et dans la taille du panneau (6a).

3. Aménagement de véhicule selon la revendication 1 ou 2, **caractérisé en ce qu'**une unité de commande (13) est connectée aux élévateurs hydrauliques (8).

4. Tout aménagement du véhicule selon l'une des revendications 1 à 3, **caractérisé en ce que** la rampe (9b) qui supporte le véhicule (10) et la rampe (9a) qui est utilisée pour le roulement forment une seule unité.

5. Tout aménagement du véhicule selon l'une des revendications 1 à 4, **caractérisé en ce que** la rampe (9b) qui supporte le véhicule (10) forme un angle de 5 à 30 degrés, de préférence un angle de 15 à 20 degrés avec la plaque de 20 base (2a) du garage (2).
